# EUROPÄISCHE PATENTSCHRIFT

(11) **EP 3 887 178 B1**
(45) Veröffentlichungstag und Bekanntmachung des Hinweises auf die Patenterteilung: **23.04.2025**
(21) Anmeldenummer: 19816237.2
(22) Anmeldetag: 29.11.2019
(51) Int. Cl.: B60D 1/46, B62D 53/12, B60D 1/01, B62D 53/08, B60T 13/26, B60D 1/64, B60D 1/62, B62D 49/00, B60D 1/36

(54) **FAHRERLOSES TRANSPORTFAHRZEUG SOWIE VERFAHREN ZUM BEWEGEN EINES SATTELAUFLIEGERS DURCH EIN FAHRERLOSES TRANSPORTFAHRZEUG**
DRIVERLESS TRANSPORT VEHICLE AND METHOD FOR MOVING A SEMI-TRAILER USING A DRIVERLESS TRANSPORT VEHICLE
VÉHICULE À GUIDAGE AUTOMATIQUE ET PROCÉDÉ POUR DÉPLACER UNE SEMI-REMORQUE AU MOYEN D'UN VÉHICULE À GUIDAGE AUTOMATIQUE

(30) Priorität: 30.11.2018 DE 102018130584
(43) Veröffentlichungstag der Anmeldung: 06.10.2021
(73) Patentinhaber: Bayerische Motoren Werke Aktiengesellschaft, 80809 München (DE)
(72) Erfinder: CLAUER, Dana, 80639 München (DE); PRÜGLMEIER, Marco, 80637 München (DE); DR. IRRENHAUSER, Thomas, 80797 München (DE); ECKL, Josef, 94267 Prackenbach (DE); WITTICH, Fabian, 92274 Gebenbach (DE)
(74) Vertreter: Hofstetter, Schurack & Partner
(86) Internationale Anmeldenummer: PCT/EP2019/083076
(87) Internationale Veröffentlichungsnummer: WO 2020/109545

(56) Entgegenhaltungen:
- WO-A1-2014/131624
- WO-A1-2014/131624
- WO-A1-2018/162031
- WO-A1-2018/162031
- WO-A1-2018/202483
- WO-A1-2018/202483
- WO-A1-2020/112535
- CN-A- 107 264 629
- CN-A- 107 264 629
- DE-A1- 102009 052 382
- DE-A1- 102012 207 269
- DE-A1- 102012 207 269
- DE-A1- 102014 014 717
- DE-A1- 102016 218 603
- DE-A1- 102016 218 603
- US-A1- 2013 297 154
- US-B1- 8 838 322
- US-B1- 8 838 322

## Beschreibung

Es wird ein fahrerloses Transportfahrzeug zum Bewegen eines Sattelaufliegers angegeben. Weiterhin wird ein Verfahren zum Bewegen eines Sattelaufliegers durch ein fahrerloses Transportfahrzeug angegeben.

Nach heutigem Stand der Technik werden Anhänger in Form von Sattelaufliegern beziehungsweise Trailern in Produktionswerken mit einer klassischen Zugmaschine transportiert. Diese Zugmaschinen sind für den Langstreckeneinsatz auf der Straße ausgelegt. Im Werk muss oft rangiert werden, die Zugmaschinen sind allerdings nicht sehr wendig. Zum Fahren der Betriebsmaschinen wird zudem ein Mitarbeiter benötigt, der die Zugmaschine fährt. Die Fahrten sind meist nur sehr kurz, was nicht sehr effizient hinsichtlich des Benzinverbrauchs ist.

Die WO 2018/202 483 A1 betrifft ein Verfahren zum Betrieb eines automatisch geführten Transportfahrzeugs für Container, das sowohl während einer Vorwärtsfahrt als auch während einer Rückwärtsfahrt automatisch führbar ist und das eine Zugmaschine und einen Anhänger mit einer Ladefläche für mindestens einen Container aufweist, wobei das Transportfahrzeug, insbesondere die Zugmaschine, eine Fahrzeugsteuerung aufweist, um eine Lenkung und einen Fahrantrieb des Transportfahrzeugs so anzusteuern, dass das Transportfahrzeug einer Soll-Route folgt. Um ein derartiges Verfahren zu verbessern, wird vorgeschlagen, dass die Soll-Route automatisch unter Berücksichtigung einer Trajektorie des Transportfahrzeugs vorgegeben wird.

In der DE 10 2016 218 603 A1 wird eine Vorrichtung zur Positionserkennung eines ersten oder zweiten miteinander zu kuppelnden Fahrzeugs beschrieben, aufweisend eine an dem ersten oder zweiten Fahrzeug anordbare Sensoreinrichtung, welche mindestens einen Bezugspunkt des anderen zweiten oder ersten Fahrzeugs messtechnisch erfasst. Die WO 2018/162 031 A1 betrifft ein Verfahren mit den Schritten: Einparken eines Anhängers mittels eines Zugfahrzeugs, wobei der Anhänger über ein Kupplungselement des Anhängers mit dem Zugfahrzeug gekoppelt ist; das Zugfahrzeug schätzt Position und Kurs des Kupplungselements des geparkten Anhängers; Übertragen der geschätzten Position und des geschätzten Kurses des Kupplungselements des geparkten Anhängers an eine Datenspeichervorrichtung; und automatisches Abkoppeln des Anhängers von dem Zugfahrzeug, so dass das Zugfahrzeug von dem geparkten Anhänger wegfahren kann.

In der DE 10 2009 052382 A1 wird ein Fahrerloses Transportfahrzeug zum Bewegen eines Sattelaufliegers beschrieben, aufweisend eine Koppeleinrichtung mit einer Mehrzahl von Sensoren zum automatisierten Koppeln des fahrerlosen Transportfahrzeugs mit einem Königszapfen eines Sattelaufliegers, wobei die Koppeleinrichtung eine Sattelkupplung aufweist.

Nachteilig bei den bekannten Zugmaschinen ist, dass jeweils zumindest ein Mitarbeiter benötigt wird, der die Zugmaschine fährt. Weiterhin sind Zugmaschinen nicht ideal geeignet für Werksgelände.

Es ist eine zu lösende Aufgabe zumindest einiger Ausführungsformen, ein fahrerloses Transportfahrzeug anzugeben, durch welches ein Sattelauflieger bewegt werden kann. Eine weitere Aufgabe ist es, ein Verfahren zum Bewegen eines Sattelaufliegers durch ein fahrerloses Transportfahrzeug anzugeben.

Diese Aufgaben werden durch Gegenstände gemäß den unabhängigen Patentansprüchen gelöst. Vorteilhafte Ausführungsformen und Weiterbildungen des Gegenstandes gehen weiterhin aus den abhängigen Patentansprüchen, der nachfolgenden Beschreibung und aus den Zeichnungen hervor.

Ein hier beschriebenes fahrerloses Transportfahrzeug weist eine Koppeleinrichtung zum Koppeln, insbesondere zum automatisierten Koppeln, des fahrerlosen Transportfahrzeugs (FTF) mit einem Königszapfen eines Sattelaufliegers beziehungsweise eines sogenannten Trailers auf.

Das fahrerlose Transportfahrzeug kann auch als fahrerloses Transportsystem (FTS) oder als Automated Guided Vehicle (AGV) bezeichnet werden.

Das flächenbewegliche fahrerlose Transportsystem wird insbesondere für den Transport eines Trailers auf dem Werksgelände verwendet. Dabei hebt das fahrerlose Transportsystem den Trailer am vorderen Ende an und kann ihn mit Hilfe der Räder am hinteren Ende des Trailers verfahren. Das fahrerlose Transportsystem nimmt den Trailer am Abstellort auf und bringt ihn automatisch zur gewünschten Werkshalle beziehungsweise eine Ablade- und/oder Beladestelle. Das fahrerlose Transportsystem kann dabei mit Hilfe von Sensoren Hindernisse in der Nähe der Plattform und des gegebenenfalls angehängten Sattelaufliegers erkennen und um diese gegebenenfalls herum fahren oder anhalten.

Vorzugsweise kann das fahrerlose Transportsystem Lasten bis zu 40 t, also beispielsweise einen Sattelauflieger mit 40 t, ziehen. Weiterhin ist das fahrerlose Transportfahrzeug in- und outdoorfähig und weist einen omnidirektionalen Antrieb auf. Vorzugsweise weist das fahrerlose Transportfahrzeug weiterhin die neuste Sensor- und Navigationstechnik auf.

Das fahrerloses Transportsystem kann zum Zugbetrieb von unterschiedlichen Varianten von Sattelaufliegern eingesetzt werden, beispielsweise von Planenaufliegern, Kofferaufliegern, Tiefladeaufliegern, Containeraufliegern, Tankaufliegern.

Zudem weist das fahrerlose Transportfahrzeug Sensoren zum automatisierten Koppeln der Koppeleinrichtung des fahrerlosen Transportfahrzeugs mit dem Königszapfen auf. Hierdurch kann beispielsweise die Sattelkupplung in einfacher Weise zum Königszapfen ausgerichtet und mit diesem gekoppelt werden. Hierzu wird insbesondere in Abhängigkeit der durch die entsprechenden Sensoren ermittelten Daten das fahrerlose Transportfahrzeug relativ zum Königszapfen bewegt. Alternativ hierzu wäre es gegebenenfalls auch denkbar, die Sattelkupplung in Fahrzeugquerrichtung und/oder in Fahrzeuglängsrichtung relativbeweglich zum Aufbau/Gestell des fahrerlosen Transportfahrzeugs zu lagern, um hierdurch die Kupplungsposition zwischen Sattelkupplung und Königszapfen zu erreichen.

Vorzugsweise weist die Koppeleinrichtung eine Adaptereinheit zum form- und/oder kraftschlüssigen Verbinden mit dem Königszapfen des Sattelaufliegers auf. Insbesondere umfasst die Koppeleinrichtung eine Sattelkupplung mit einer Sattelplatte, welche von dem fahrerlosen Transportsystem getragen ist. Die Sattelkupplung dient dabei unter anderem einerseits zum Abstützen und Tragen des Trailers unter Vermittlung des Königszapfens, und andererseits zum Verriegeln des Königszapfens an der Sattelplatte. Insbesondere wird hierbei eine normierte Sattelkupplung und Sattelplatte eingesetzt, um möglichst viele gängige Sattelauflieger aufnehmen und rangieren zu können.

Weiterhin kann die Koppeleinrichtung eine Vorrichtung zum Anheben des Sattelaufliegers, insbesondere eine hydraulische Vorrichtung, aufweisen. Diese Vorrichtung kann beispielsweise zwischen der Sattelkupplung und dem Aufbau/Gestell des fahrerlosen Transportsystems angeordnet sein, so dass die Sattelkupplung (und damit einhergehend der vordere Bereich des Sattelaufliegers/Trailers) relativ zum Aufbau/Gestell des fahrerlosen Transportsystems angehoben und abgesenkt werden kann. Alternativ hierzu könnte das Fahrwerk des fahrerlosen Transportsystems auch mit einer Luftfederung oder dergleichen als besagte Vorrichtung versehen sein, wie dies üblicherweise auch bei Sattelzugmaschinen der Fall ist, so dass das Anheben und Absenken des vorderen Teils des Sattelaufliegers/Trailers durch Höhenverstellung des Aufbaus/Gestells des fahrerlosen Transportsystems und damit auch der Sattelkupplung erfolgt.

Gemäß einer weiteren Ausführungsform weist das fahrerlose Transportfahrzeug eine Mehrzahl von Sensoren zur Umgebungserfassung auf. Beispielsweise kann das fahrerlose Transportfahrzeug einen im Wesentlichen quaderförmigen Grundkörper aufweisen, an welchem zumindest vier Lasersensoren angeordnet sind. Es kann zum Beispiel an vier verschiedenen Ecken bzw. Kanten des Grundkörpers des fahrerlosen Transportfahrzeugs jeweils mindestens ein Lasersensor zur Umfelderkennung angeordnet sein.

Gemäß einer weiteren Ausführungsform weist das fahrerlose Transportfahrzeug eine Mehrzahl von Antriebsrädern auf, welche derart ansteuerbar sind, dass das fahrerlose Transportfahrzeug omnidirektional bewegbar ist. Beispielsweise können mindestens zwei Antriebsräder mit unterschiedlichen Antriebsdrehmomenten und/oder gegenläufig orientierten Antriebsdrehmomenten und/oder gegenläufig orientierten Drehrichtungen beaufschlagt werden. Insbesondere weist das fahrerlose Transportsystem wenigstens eine Vorderachse und wenigstens eine Hinterachse beziehungsweise entsprechende, den Achsen zugeordnete Antriebsräder auf, die mit unterschiedlichen Antriebsdrehmomenten und/oder gegenläufig orientierten Antriebsdrehmomenten und/oder gegenläufig orientierten Drehrichtungen betreibbar sind.

Weiterhin wird ein Verfahren zum Bewegen eines Sattelaufliegers durch ein fahrerloses Transportfahrzeug angegeben. Dabei wird ein fahrerloses Transportfahrzeug mit einem Sattelauflieger, vorzugsweise automatisch, gekoppelt, wobei vorzugsweise eine Koppeleinrichtung des fahrerlosen Transportfahrzeugs mit dem Königszapfen des Sattelaufliegers verbunden wird. Beispielsweise kann eine Adaptereinheit der Koppeleinrichtung eine form- und/oder kraftschlüssige Verbindung mit dem Königszapfen eingehen. Insbesondere wird hierfür eine bereits oben beschriebene Sattelkupplung eingesetzt. Weiterhin kann der Sattelauflieger durch eine Vorrichtung zum Anheben, insbesondere eine hydraulische Vorrichtung, unmittelbar vor und/oder während und/oder unmittelbar nach dem Koppeln angehoben werden, sodass der Sattelauflieger durch das fahrerlose Transportfahrzeug bewegt werden kann. Hierfür wird beispielsweise eine bereits oben beschriebene Vorrichtung zum Anheben des Sattelaufliegers eingesetzt.

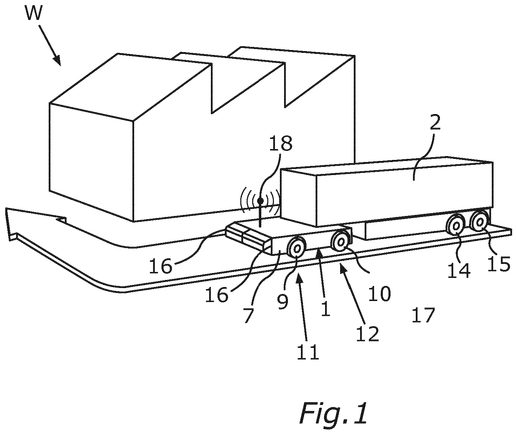

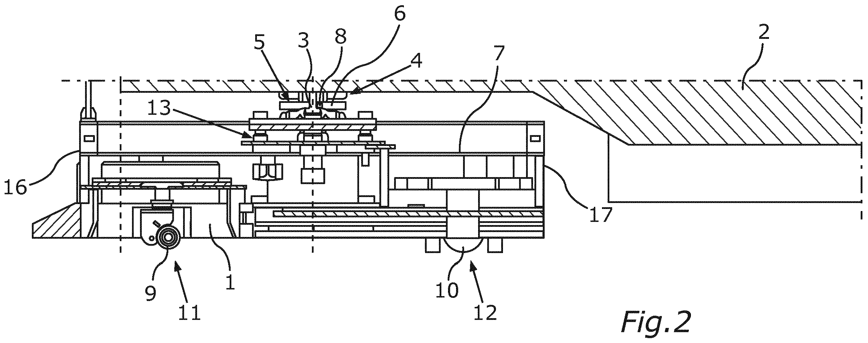

Weitere Vorteile und vorteilhafte Ausführungsformen des hier beschriebenen fahrerlosen Transportfahrzeugs und des Verfahrens zum Bewegen eines Sattelaufliegers durch ein fahrerloses Transportfahrzeug ergeben sich aus den im Folgenden in Verbindung mit den Figuren 1 und 2 beschriebenen Ausführungsformen. Es zeigen:
- Fig. 1: eine schematische Darstellung eines fahrerlosen Transportfahrzeugs zum Bewegen eines Sattelaufliegers gemäß einem Ausführungsbeispiel, und
- Fig. 2: eine schematische Darstellung eines fahrerlosen Transportfahrzeugs zum Bewegen eines Sattelaufliegers gemäß einem weiteren Ausführungsbeispiel.

In den Ausführungsbeispielen und Figuren können gleiche oder gleich wirkende Bestandteile jeweils mit den gleichen Bezugszeichen versehen sein. Die dargestellten Elemente und deren Größenverhältnisse untereinander sind grundsätzlich nicht als maßstabsgerecht anzusehen. Vielmehr können einzelne Elemente zur besseren Darstellbarkeit und/oder zum besseren Verständnis übertrieben dick oder groß dimensioniert dargestellt sein.

Die Fig. 1 zeigt ein fahrerloses Transportfahrzeug 1, welches einen Sattelauflieger 2 bewegt. Wie in der Figur 2 zu erkennen ist, ist dabei eine Koppeleinrichtung 4 des fahrerlosen Transportfahrzeugs 1 mit dem Königszapfen 3 des Sattelaufliegers 2 verbunden.

Alternativ oder zusätzlich können die in den Figuren gezeigten Ausführungsbeispiele weitere Merkmale gemäß den Ausführungsformen der allgemeinen Beschreibung aufweisen.

Wie aus Fig. 1 zu erkennen ist, dient das fahrerlose Transportfahrzeug 1 zum Bewegen des Sattelaufliegers 2 insbesondere innerhalb eines Werksgeländes W. Es hat sich nämlich gezeigt, dass das bisherige Verfahren in Werksgeländen W, bei welchem jeweilige Sattelauflieger 2 beziehungsweise Trailer in Produktionswerken mit einer klassischen Zugmaschine transportiert werden, insbesondere aus wirtschaftlicher Sicht nicht sinnvoll ist. Diese Zugmaschinen sind nämlich für den Langstreckeneinsatz auf der Straße ausgelegt und sind bei Fahrten in Werksgeländen W, welche im Verhältnis zum Langstreckeneinsatz meist nur sehr kurz sind, nicht sehr effizient hinsichtlich des Energieverbrauchs. Zudem muss auf dem Werksgelände W oft rangiert werden; allerdings sind die Zugmaschinen nicht sehr wendig.

Aus diesem Grund wird vorliegend auf dem Werksgelände W anstelle einer Sattelzugmaschine das fahrerlose Transportfahrzeug 1 bereitgestellt, welches mit dem Sattelauflieger 2 automatisch gekoppelt werden kann. Hierzu weist das fahrerlose Transportfahrzeug 1 die in Fig. 2 erkennbare Koppeleinrichtung 4 auf, welche mit dem Königszapfen 3 des Sattelaufliegers 2 verbindbar beziehungsweise in Fig. 2 verbunden ist.

Wie aus Fig. 2 zu erkennen ist, weist die Koppeleinrichtung 4 eine Adaptereinheit zum form- und/oder kraftschlüssige Verbinden mit dem Königszapfen 3 auf, die hier eine üblicher Weise eingesetzte Sattelkupplung 5 umfasst. Die Sattelkupplung 5 weist hierbei eine Sattelplatte 6 auf, welche von einem Aufbau beziehungsweise Gestell 7 des fahrerlosen Transportsystems 1 getragen ist. In die Sattelplatte 6 ist eine Verriegelungseinrichtung 8 integriert, mittels welcher der Königszapfen 3 an der Sattelplatte 6 verriegelt werden kann. Die Sattelkupplung 5 dient somit unter anderem einerseits zum Abstützen und Tragen des Trailers 2 unter Vermittlung des Königszapfens 3, und andererseits zum Verriegeln des Königszapfens 3 an der Sattelplatte 6. Insbesondere wird hierbei eine normierte Sattelkupplung 5 und Sattelplatte 6 eingesetzt, um möglichst viele gängige Sattelauflieger 2 aufnehmen und rangieren zu können.

Weiterhin umfasst das fahrerlose Transportfahrzeug 1 eine Mehrzahl von Antriebsrädern, von welchen in den Fig. 1 und 2 jeweilige vordere und hintere Antriebsräder 9, 10 gezeigt sind. Diese sind hier derart ansteuerbar sind, dass das fahrerlose Transportfahrzeug 1 omnidirektional bewegbar ist. Beispielsweise können mindestens zwei Antriebsräder 9, 10 derart ausgebildet sein, dass sie mit unterschiedlichen Antriebsdrehmomenten und/oder gegenläufig orientierten Antriebsdrehmomenten und/oder gegenläufig orientierten Drehrichtungen beaufschlagt werden können. Insbesondere kann das fahrerlose Transportsystem 1 wenigstens eine Vorderachse 11 und wenigstens eine Hinterachse 12 beziehungsweise entsprechende, zugehörige Antriebsräder 9, 10 aufweisen, die mit unterschiedlichen Antriebsdrehmomenten und/oder gegenläufig orientierten Antriebsdrehmomenten und/oder gegenläufig orientierten Drehrichtungen betreibbar sind. Somit ist das fahrerlose Transportfahrzeug 1 beispielsweise omnidirektional in Fahrzeuglängsrichtung und Fahrzeugquerrichtung bewegbar. In einer besonderen Ausführungsform weist das fahrerlose Transportfahrzeug 1 eine Vorderachse 11 mit jeweiligen, angetriebenen und lenkbaren Vorderrädern 9 und zwei Hinterachsen 12 mit jeweiligen, angetriebenen und lenkbaren Hinterrädern 10 auf. Hierdurch ist der Sattelauflieger 2 besonders gut manövrierbar.

Es ist klar, dass im Rahmen der Erfindung auch andere Konfigurationen von angetriebenen und lenkbaren Rädern des fahrerlosen Transportfahrzeugs 1 denkbar sind. Dabei kann das fahrerlose Transportfahrzeug 1 auch starre und/oder nicht angetriebene Räder aufweisen.

Weiterhin umfasst das fahrerlose Transportfahrzeug 1 eine Vorrichtung 13 zum Anheben des vorderen Endes des Sattelaufliegers 2, so dass dieser mit Hilfe seiner Räder 14, 15 am hinteren Ende des Trailers 2 verfahren werden kann. Diese Vorrichtung 13 kann beispielsweise eine hydraulische Vorrichtung sein, mittels welcher unmittelbar vor und/oder während und/oder unmittelbar nach dem Koppeln des Königszapfens 3 mit der Sattelkupplung 5 der Trailer 2 angehoben werden kann, sodass dieser durch das fahrerlose Transportfahrzeug 1 bewegt werden kann. Gegebenenfalls wäre es, insbesondere zur Verbesserung der Wendigkeit des Trailers 2 und des Sattelzugs insgesamt, auch denkbar, dass durch einsprechende Steuerung/Beeinflussung wenigstens eine Achse beziehungsweise die entsprechenden Räder 14, 15 des Trailers 2 angehoben werden.

Gemäß Fig. 2 ist im vorliegenden Fall die hydraulische Vorrichtung 13 zwischen der Sattelkupplung 5 und dem Aufbau/Gestell 7 des fahrerlosen Transportsystems 1 angeordnet. Hierbei sind beispielsweise jeweilige Hydraulikelemente, beispielsweise Kolben-Zylinder-Elemente, zwischen der Sattelplatte 6 und dem Aufbau/Gestell 7 angeordnet, mittels welchen die Sattelplatte 6 relativ zum Aufbau/Gestell 7 in Fahrzeughochrichtung anhebbar und absenkbar ist.

Um ein automatisches Ankoppeln des Königszapfens 3 an der Sattelkupplung 5 zu erreichen, weist die Kopplungseinrichtung 4 beispielsweise jeweilige Sensoren zum automatisierten Koppeln mit dem Königszapfen 3 auf. Hierdurch kann beispielsweise die Position der Sattelkupplung 5 relativ zu dem Königszapfen 3 ermittelt werden. hierbei wäre es denkbar, die Sattelkupplung 5 in Fahrzeugquerrichtung und/oder in Fahrzeuglängsrichtung relativbeweglich zum Aufbau/Gestell 7 des fahrerlosen Transportfahrzeugs 1 zu lagern, so dass je nach mittels der Sensorik ermittelter Relativposition die Sattelkupplung 5 relativ zum Königszapfen 3 (fein) verstellt werden kann, bis die Kupplungsposition zwischen Sattelkupplung 5 und Königszapfen 3 erreicht ist. Ist insbesondere eine Grobverstellung zwischen Sattelkupplung 5 und Königszapfen 3 erforderlich, kann diese durch Verfahren des fahrerlosenTransportfahrzeugs 1 relativ zum Königszapfen 3 erfolgen. Gegebenenfalls kann die Positionierung der Sattelkupplung 5 relativ zum Königszapfen 3 auch ausschließlich durch Verfahren des fahrerlosenTransportfahrzeugs 1 durchgeführt werden. Nach erreichter Kupplungsposition zwischen Sattelkupplung 5 und Königszapfen 3, welche beispielsweise über eine entsprechende Sensorik erfasst wird, kann dann das automatische Verriegeln des Königszapfens 3 an der Sattelkupplung 5 mittels der Verriegelungseinrichtung 8 erfolgen.

Das Abkoppeln nach dem Rangieren des Trailers 1 kann in entsprechend umgekehrter Reihenfolge erfolgen, indem zunächst die Verriegelungseinrichtung 8 gelöst und dann durch Unterstützung mittels der Sensorik die Sattelkupplung 5 außer Eingriff mit dem Königszapfen 3 gebracht wird, indem beispielsweise das fahrerlose Transportfahrzeug 1 verfahren und/oder die Sattelkupplung 5 relativ zum Aufbau/Gestell 7 verfahren wird.

Alternativ zu der beschriebenen Vorrichtung zum Anheben der Sattelplatte 6 kann als Vorrichtung zum Anheben des vorderen Endes des Sattelaufliegers 2 auch das Fahrwerk des fahrerlosen Transportsystems 1 dienen. Hierbei wäre es beispielsweise denkbar, die jeweiligen Räder 9, 10 des fahrerlosen Transportfahrzeugs 1 über eine Luftfederung oder dergleichen am Aufbau/Gestell 7 abzustützen, so dass das Anheben und Absenken des fahrerlosen Transportsystems 1 und damit auch des vorderen Endes des Trailers 2 durch Höhenänderung jeweiliger Luftfedern oder dergleichen der Luftfederung vorgenommen werden kann.

Das fahrerlose Transportfahrzeug 1 weist außerdem eine Mehrzahl von Sensoren zur Umgebungserfassung auf. Beispielsweise kann das fahrerlose Transportfahrzeug 1 einen Aufbau 7 mit einem im Wesentlichen quaderförmigen Grundkörper aufweisen, an welchem zumindest vier Lasersensoren oder dergleichen Sensoren angeordnet sind. Beispielsweise können jeweilige Sensoren an vier verschiedenen Ecken bzw. Kanten 16, 17 des Grundkörpers 7 des fahrerlosen Transportfahrzeugs 1 angeordnet sein. Das fahrerlose Transportsystem 1 kann dabei mit Hilfe der Sensoren Hindernisse in der Nähe des Fahrzeugs 1 und des gegebenenfalls angehängten Sattelaufliegers 2 erkennen und um diese gegebenenfalls herum fahren oder anhalten.

Das fahrerlose Transportfahrzeug 1 kann außerdem beispielsweise mittels einer Sende- und/oder Empfängereinheit 18 mit einer zentralen Steuerung des Werksgeländes verbunden sein, um somit beispielsweise zu den entsprechenden Trailern 1 beziehungsweise den entsprechenden Ablade- und/oder Beladestellen geleitet zu werden.

## Patentansprüche

1. Fahrerloses Transportfahrzeug (1) zum Bewegen eines Sattelaufliegers (2), aufweisend eine Koppeleinrichtung (4) zum automatisierten Koppeln des fahrerlosen Transportfahrzeugs (1) mit einem Königszapfen (3) eines Sattelaufliegers (2) und
die Koppeleinrichtung (4) aufweisend eine Mehrzahl von Sensoren zum automatisierten Koppeln der Koppeleinrichtung (4) des fahrerlosen Transportfahrzeugs (1) mit dem Königszapfen (3), wobei die Koppeleinrichtung (4) eine Adaptereinheit (6, 8) zum form- und/oder kraftschlüssigen Verbinden mit dem Königszapfen (3) des Sattelaufliegers (2) aufweist, wobei die Adaptereinheit (6, 8) eine Sattelkupplung (5) aufweist, **dadurch gekennzeichnet, dass** die Sattelkupplung (5) in Fahrzeugquerrichtung und/oder in Fahrzeuglängsrichtung relativbeweglich zum Aufbau/Gestell des fahrerlosen Transportfahrzeugs (1) gelagert ist, um hierdurch die Kupplungsposition zwischen Sattelkupplung und Königszapfen zu erreichen.

2. Fahrerloses Transportfahrzeug (1) nach einem der vorhergehenden Ansprüche,
wobei die Koppeleinrichtung (4) eine Vorrichtung (13) zum Anheben des Sattelaufliegers (2) aufweist.

3. Fahrerloses Transportfahrzeug (1) nach Anspruch 2,
wobei die Vorrichtung (13) zum Anheben des Sattelaufliegers (2) eine hydraulische Vorrichtung ist.

4. Fahrerloses Transportfahrzeug (1) nach einem der vorhergehenden Ansprüche, aufweisend eine Mehrzahl von Sensoren zur Umgebungserfassung.

5. Fahrerloses Transportfahrzeug (1) nach Anspruch 4,
wobei das fahrerlose Transportfahrzeug (1) einen im Wesentlichen quaderförmigen Grundkörper (7) aufweist, an welchem zumindest vier Lasersensoren angeordnet sind.

6. Fahrerloses Transportfahrzeug (1) nach einem der vorhergehenden Ansprüche, aufweisend eine Mehrzahl von Antriebsrädern (9, 10), welche ausgebildet sind das fahrerlose Transportfahrzeug (1) omnidirektional zu bewegen.

7. Verfahren zum Bewegen eines Sattelaufliegers (2) durch ein fahrerloses Transportfahrzeug (1), aufweisend die folgenden Schritte:
- Bereitstellen eines fahrerlosen Transportfahrzeugs (1) gemäß einem der vorhergehenden Ansprüche,
- Bereitstellen eines zu bewegenden Sattelaufliegers (2),
- Automatisiertes Koppeln des fahrerlosen Transportfahrzeugs (1) mit einem Königszapfen (3) eines Sattelaufliegers (2) durch eine Koppeleinrichtung (4),
- Bewegen des Sattelaufliegers (2) durch ein Losfahren des fahrerlosen Transportfahrzeugs (1)**.**

8. Verfahren nach Anspruch 7,
wobei beim Koppeln eine Adaptereinheit (6, 8) der Koppeleinrichtung (4) eine form- und/oder kraftschlüssige Verbindung mit dem Königszapfen (3) des Sattelaufliegers (2) eingeht.

9. Verfahren nach einem der Ansprüche 7 oder 8,
wobei, unmittelbar vor und/oder während und/oder unmittelbar nach dem Koppeln, der Sattelauflieger (2) durch eine Vorrichtung (13), insbesondere eine hydraulische Vorrichtung, angehoben wird.

## Claims

1. A driverless transport vehicle (1) for moving a semi-trailer (2), comprising a coupling device (4) for coupling the driverless transport vehicle (1) to a kingpin (3) of a semi-trailer (2) in an automated manner, and the coupling device (4) comprising a plurality of sensors for coupling the coupling device (4) of the driverless transport vehicle (1) to the kingpin (3) in an automated manner, the coupling device (4) comprising an adapter unit (6, 8) for connecting to the kingpin (3) of the semi-trailer (2) in a form-fit and/or force-fit manner, the adapter unit (6, 8) comprising a fifth-wheel coupling (5), **characterized in that** the fifth-wheel coupling (5) is mounted so as to be movable relative to the body/frame of the driverless transport vehicle (1) in the transverse vehicle direction and/or in the longitudinal vehicle direction in order to reach the coupling position between the fifth-wheel coupling and the kingpin in this way.

2. The driverless transport vehicle (1) according to claim 1, wherein the coupling device (4) comprises an apparatus (13) for lifting the semi-trailer (2).

3. The driverless transport vehicle (1) according to claim 2, wherein the apparatus (13) for lifting the semi-trailer (2) is a hydraulic apparatus.

4. The driverless transport vehicle (1) according to any of the preceding claims, comprising a plurality of sensors for surroundings detection.

5. The driverless transport vehicle (1) according to claim 4, wherein the driverless transport vehicle (1) comprises a substantially cuboid main body (7), on which at least four laser sensors are arranged.

6. The driverless transport vehicle (1) according to any of the preceding claims, comprising a plurality of drive wheels (9, 10), which are designed to omnidirectionally move the driverless transport vehicle (1).

7. A method for moving a semi-trailer (2) by means of a driverless transport vehicle (1), comprising the following steps:
- providing a driverless transport vehicle (1) according to any of the preceding claims,
- providing a semi-trailer (2) to be moved,
- coupling the driverless transport vehicle (1) to a kingpin (3) of a semi-trailer (2) in an automated manner by means of a coupling device (4),
- moving the semi-trailer (2) by moving off in the driverless transport vehicle (1).

8. The method according to claim 7, wherein an adapter unit (6, 8) of the coupling device (4) establishes a form-fit and/or force-fit connection to the kingpin (3) of the semi-trailer (2) during the coupling.

9. The method according to any of claims 7 or 8, wherein the semi-trailer (2) is lifted by an apparatus (13), in particular a hydraulic apparatus, immediately before and/or during and/or immediately after the coupling.

## Revendications

1. Véhicule (1) à guidage automatique pour déplacer une semi-remorque (2),
comprenant un dispositif d'attelage (4) pour l'attelage automatisé du véhicule (1) à guidage automatique avec un pivot d'attelage (3) d'une semi-remorque (2), et
le dispositif d'attelage (4) comprenant une pluralité de capteurs pour l'attelage automatisé du dispositif d'attelage (4) du véhicule (1) à guidage automatique avec le pivot d'attelage (3), où le dispositif d'attelage (4) comprend une unité d'adaptation (6, 8) pour une connexion par complémentarité de forme et/ou par adhérence au pivot d'attelage (3) de la semi-remorque (2), où l'unité d'adaptation (6, 8) comprend une sellette d'attelage (5), **caractérisé en ce que**
la sellette d'attelage (5) est montée avec une mobilité relative par rapport à la carrosserie/au châssis du véhicule (1) à guidage automatique dans le sens transversal du véhicule et/ou dans le sens longitudinal du véhicule, pour atteindre ainsi la position d'attelage entre la sellette d'attelage et le pivot d'attelage.

2. Véhicule (1) à guidage automatique selon la revendication 1,
dans lequel le dispositif d'attelage (4) comprend un dispositif (13) pour soulever la semi-remorque (2).

3. Véhicule (1) à guidage automatique selon la revendication 2,
dans lequel le dispositif (13) pour soulever la semi-remorque (2) est un dispositif hydraulique.

4. Véhicule (1) à guidage automatique selon l'une des revendications précédentes, comprenant une pluralité de capteurs pour la détection de l'environnement.

5. Véhicule (1) à guidage automatique selon la revendication 4,
le véhicule (1) à guidage automatique comprenant un corps de base (7) sensiblement cubique sur lequel sont agencés au moins quatre capteurs laser.

6. Véhicule (1) à guidage automatique selon l'une des revendications précédentes,
comprenant une pluralité de roues motrices (9, 10) qui sont conçues pour déplacer le véhicule (1) à guidage automatique de manière omnidirectionnelle.

7. Procédé de déplacement d'une semi-remorque (2) par un véhicule (1) à guidage automatique, comprenant les étapes suivantes :
- fourniture d'un véhicule (1) à guidage automatique selon l'une des revendications précédentes,
- fourniture d'une semi-remorque (2) à déplacer,
- attelage automatisé du véhicule (1) à guidage automatique avec un pivot d'attelage (3) d'une semi-remorque (2) par un dispositif d'attelage (4),
- déplacement de la semi-remorque (2) par démarrage du véhicule (1) à guidage automatique.

8. Procédé selon la revendication 7,
dans lequel, lors de l'attelage, une unité d'adaptation (6, 8) du dispositif d'attelage (4) entre en contact par complémentarité de forme et/ou par adhérence avec le pivot d'attelage (3) de la semi-remorque (2).

9. Procédé selon l'une des revendications 7 ou 8,
dans lequel, la semi-remorque (2) est soulevée immédiatement avant et/ou pendant et/ou immédiatement après l'attelage par un dispositif (13), en particulier un dispositif hydraulique.
